# EUROPÄISCHE PATENTSCHRIFT

(11) **EP 4 387 272 B1**
(45) Veröffentlichungstag und Bekanntmachung des Hinweises auf die Patenterteilung: **25.03.2026**
(21) Anmeldenummer: 23171848.7
(22) Anmeldetag: 05.05.2023
(51) Int. Cl.: H04R 25/00, H01R 13/62, H02J 7/00, H01R 24/38, H01R 11/30

(54) **LADEKONTAKTANSCHLUSS**
CHARGING CONTACT TERMINAL
BORNE DE CONTACT DE CHARGE

(30) Priorität: 16.12.2022 EP 22214056
(43) Veröffentlichungstag der Anmeldung: 19.06.2024
(73) Patentinhaber: Sivantos Pte. Ltd., Singapore 539775 (SG)
(72) Erfinder: DING, Lit Song Glen, 539775 Singapur (SG); CHEN, Yu, 539775 Singapur (SG)
(74) Vertreter: FDST Patentanwälte

(56) Entgegenhaltungen:
- EP-A1- 3 364 506
- EP-A1- 3 771 225
- CN-U- 212 485 668

## Beschreibung

Die Erfindung betrifft einen Ladekontaktanschluss für ein Ladegerät eines elektrischen Geräts, insbesondere eines Hörgeräts. Die Erfindung betrifft weiterhin ein Ladekontaktsystem sowie ein elektrisches Gerät.

Hörhilfegeräte sind tragbare Hörgeräte, die insbesondere zur Versorgung von Schwerhörenden oder Hörgeschädigten dienen. Um den zahlreichen individuellen Bedürfnissen entgegenzukommen, werden unterschiedliche Bauformen von Hörhilfegeräte wie Hinter-dem-Ohr-Hörgeräte (HdO) und Hörgeräte mit einem ex-ternen Hörer (RIC: receiver in the canal) sowie In-dem-Ohr-Hörgeräte (IdO, ITE), zum Beispiel auch Concha-Hörgeräte oder Kanal-Hörgeräte (CIC: Completely-In-Channel, IIC: Invisible-In-The-Channel), bereitgestellt. Die beispielhaft aufgeführten Hörgeräte werden am Außenohr oder im Gehörgang eines Hörhilfegerätenutzers getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

Derartige Hörgeräte besitzen prinzipiell als wesentliche (Hörgeräte-)Komponenten einen Eingangswandler, einen Verstärker und einen Ausgangswandler. Der Eingangswandler ist in der Regel ein akusto-elektrischer Wandler, wie beispielsweise ein Mikrofon. Der Ausgangswandler ist meist als ein elektro-akustischer Wandler, zum Beispiel als ein Miniaturlautsprecher (Hörer), oder als ein elektromechanischer Wandler, wie beispielsweise ein Knochenleitungshörer, realisiert. Der Verstärker ist üblicherweise in eine Signalverarbeitungseinrichtung integriert.

Hörgeräte werden in der Regel mit Batterien betrieben. Die Betriebsdauer ist je nach Energieinhalt der Batterien und den Anforderungen des Hörgeräts begrenzt. In Anbetracht des allgemeinen Trends zur Miniaturisierung werden Batterien mit geringer Größe bevorzugt, was ihren Energiegehalt zusätzlich begrenzt. Um den häufigen Austausch verbrauchter Batterien zu vermeiden, können Hörgeräte mit wiederaufladbaren Batterien (Akkumulatoren) wie Nickel-Metallhydrid- (NiMH) oder Lithium-Ionen- (Li-Ion) Batterien betrieben werden.

Hörgeräte, die mit wieder aufladbaren Batterien betrieben werden, weisen häufig Anschlüsse auf, um eine elektrische Kontaktierung mit einem Ladegerät herzustellen, und somit beim Aufladen der wieder aufladbaren Batterien diese innerhalb des Hörgeräts belassen zu können. Häufig kommen dabei proprietäre Anschlüsse zum Einsatz. Aus dem Mobiltelefon-Bereich ist es allerdings zwischenzeitlich bekannt, dass eine Vielzahl von Anbietern auf Standard-Systeme zurückgreifen. Teilweise kommen bei Geräten mit wieder aufladbaren Batterien auch sogenannte Klinkenstecker zum Einsatz. Diese Systeme haben dabei häufig den Nachteil, dass die zur Herstellung der Kontaktierung erforderlichen Einsteck-Wege meist vergleichsweise lang sind und dadurch ein möglichst "blindes" Finden und einfaches Verbinden der korrespondierenden Anschlüsse insbesondere in Ladeschalen aufweisenden Ladegeräten erschwert ist. Oftmals kommen deshalb in diesem Bereich vergleichsweise flach bauende Federkontakte zum Einsatz. Letzteres ist bspw. aus dem Bereich von kabellosen Festnetztelefonen bekannt.

Aus der EP 3 771 225 A1 ist ein Ladekontaktanschluss für ein Ladegerät eines Hörgeräts bekannt. Der Ladekontaktanschluss weist hierbei einen Magneten zur Realisierung einer magnetischen Haltekraft im kontaktierten Zustand auf.

Bei Ladekontaktsystemen mit einem solchen Haltemagneten kann es sein, dass die magnetische Haltekraft vergleichsweise gering ist. Durch eine Vergrößerung des Haltemagneten und/oder eine Änderung der Qualität des Magneten kann diese Haltekraft verbessert werden, dies wirkt sich jedoch negativ auf die Baugröße und die Kosten des Hörgeräts sowie des Ladegeräts aus. Weiterhin würde der von einem stärkeren Magneten erzeugte magnetische Fluss ein höheres Risiko für eine Beschädigung eines Hörgeräteempfängers darstellen.

In der CN 212 485 668 U ist eine Kombination aus einem ersten magnetischen Verbinder und einem magnetischen Verbinder bekannt. Der erste magnetische Verbinder umfasst einen Magneten, einen an dem Magneten befestigten magnetischen Sammelring, eine leitende Nadel, die vertikal in die Mitte des Magneten eindringt, und eine äußere Befestigungsschale, die den Umfang des Magneten umgibt.

Der Erfindung liegt die Aufgabe zugrunde, einen besonders geeigneten Ladekontaktanschluss für ein Ladegerät eines elektrischen Geräts, insbesondere eines Hörgeräts, anzugeben. Der Erfindung liegt weiterhin die Aufgabe zugrunde, ein besonders geeignetes Ladegerät anzugeben.

Hinsichtlich des Ladeanschlusskontakts wird die Aufgabe mit den Merkmalen des Anspruchs 1 und hinsichtlich des Ladegeräts mit den Merkmalen des Anspruchs 7 erfindungsgemäß gelöst. Vorteilhafte Ausgestaltungen und Weiterbildungen sind Gegenstand der Unteransprüche. Die im Hinblick auf den Ladeanschlusskontakt angeführten Vorteile und Ausgestaltungen sind sinngemäß auch auf das Ladegerät übertragbar und umgekehrt.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Die vorliegende Erfindung basiert auf der früheren europäischen Patentanmeldung EP 3 771 225 A1.

Der erfindungsgemäße Ladekontaktanschluss ist für ein Ladegerät eines elektrischen Geräts, insbesondere eines Hörgeräts, vorgesehen sowie dafür geeignet und eingerichtet.

Der Ladekontaktanschluss weist hierbei einen zentralen Kontaktstift zur Kontaktierung eines ersten Gegenkontakts eines Gegenkontaktanschlusses auf. Der Gegenkontaktanschluss ist hierbei insbesondere an dem elektrischen Gerät beziehungsweise an dem Hörgerät angeordnet. Der Kontaktstift kann als ein Federkontaktstift mit einer federnd gelagerten Kontaktspitze (Pogo Pin) ausgeführt sein.

Der Ladekontaktanschluss weist weiterhin ein permanentmagnetisches Magnetelement (Haltemagnet, Kontaktmagnet) zur magnetischen Anziehung des Gegenkontaktanschlusses auf. Das Magnetelement fasst hierbei den Kontaktstift ein. Mit anderen Worten umgibt das Magnetelement den Kontaktstift zumindest abschnittsweise. Die magnetische Anziehung realisiert eine magnetische Haltekraft im kontaktierten Zustand des Ladekontaktanschlusses mit dem Gegenkontaktanschluss. Das Magnetelement ermöglicht somit, dass der Ladekontaktanschluss sowie der Gegenkontaktanschluss zur Kontaktierung lediglich "nahe" zueinander positioniert werden brauchen. Bei einem hinreichend geringen Abstand ermöglicht die magnetische Anziehungs- oder Haltekraft eine nahezu automatische Kopplung der einander zugeordneten Anschlusskontakte.

Zur Verbesserung der magnetischen Anziehungs-/Haltekraft ist erfindungsgemäß ein Kontaktelement angeordnet, welches den Magnetfluss des Magnetelements zu einem metallischen zweiten Gegenkontakt des Gegenkontaktanschlusses leitet und fokussiert. Das beispielsweise ferritische Kontaktelement ist vorzugsweise aus einem ferrimagnetischen oder ferromagnetischen Material hergestellt. Das Kontaktelement ist an einer dem Gegenkontaktanschluss zugewandten Stirnseite des Magnetelements angeordnet, und zur Führung und Fokussierung des Magnetfelds des Magnetelements in Richtung des zweiten Gegenkontakts ausgeführt und eingerichtet.

Das Kontaktelement ist vorzugsweise elektrisch leitend und weist eine Kontaktfläche auf, welche im kontaktierten Zustand mit dem Gegenkontaktanschluss in einem elektrisch leitenden Berührungskontakt mit dem zweiten Gegenkontakt ist. Das Kontaktelement bildet somit einen Schnittstellenkontakt zum Gegenkontaktanschluss. Dadurch ist ein besonders geeigneter Ladekontaktanschluss realisiert.

Das Kontaktelement weist einen kleineren Durchmesser als das Magnetelement auf. Dies bedeutet, dass das insbesondere ferritische Kontaktelement einen Außendurchmessers aufweist, der erfindungsgemäß stets kleiner als der Durchmesser des Magnetelements ist. Das Kontaktelement ist also an jeder Stelle schmäler als das Magnetelement. Dadurch wird die Führung und Fokussierung der Magnetfeldlinien bzw. des magnetischen Flusses (Magnetfluss) verbessert.

In einer bevorzugten Weiterbildung verjüngt sich der Durchmesser des Kontaktelements ausgehend vom Magnetelement entlang des Kontaktstifts. Das Kontaktelement weist somit beispielsweise eine kegel- oder kegelstumpfförmige Form auf. Durch die Verkleinerung oder Verjüngung des insbesondere ferritischen Schnittstellenkontakts kann der Magnetfluss besser auf den zweiten Gegenkontakt gelenkt und geführt werden.

In einer besonders zweckmäßigen Ausgestaltung weist das Kontaktelement zwei zueinander beabstandet angeordnete Elementhälften auf. Der Schnittstellenkontakt ist somit in zwei Teile getrennt. Vorzugsweise ist das Magnetelement hierbei ein Ringmagnet, insbesondere ein Ringmagnet mit zwei Ringmagnethälften (Halbmagnete), wobei jeder Ringmagnethälfte eine Elementhälfte zugeordnet ist. Geeigneterweise sind die Magnetpole der Ringmagnethälften hierbei zueinander entgegen gerichtet angeordnet. Durch die Aufteilung dieses Schnittstellenkontakts und des Magnetelements in zwei Teile oder Hälften sowie aufgrund der abwechselnden Polung der beiden Ringmagnethälften wird der Einflussbereich des magnetischen Flusses reduziert, ohne dass dabei die Magnetstärke nachteilig beeinträchtigt wird.

Das erfindungsgemäße Ladekontaktsystem dient zum Laden des elektrischen Geräts, insbesondere eines Hörgeräts, und weist dazu den vorstehend beschriebenen Ladekontaktanschluss sowie ggf. den dem elektrischen Gerät beziehungsweise Hörgerät zugeordneten Gegenkontaktanschluss auf. Unter einem "Laden eines elektrischen Geräts" wird hier und im Folgenden insbesondere das (Auf-)Laden eines Energiespeichers des Geräts mit elektrischer Energie verstanden.

Das Ladekontaktsystem kann beispielsweise lediglich ein Ladegerät mit dem Ladekontaktanschluss sein, oder ein System mit einem Ladegerät und einem elektrischen Gerät mit den jeweiligen Anschlüssen. Das Ladekontaktsystem beziehungsweise das Ladegerät kann hierbei insbesondere ein Ladekabel sein, bei welchem ein Kabelende in das Anschlusskontaktsystem mündet, und das andere Kabelende mit einer Energiequelle oder einem Verbindungsmittel (z.B. Netzteil) zu einer solchen verbunden oder verbindbar ist. Die Energiequelle kann hierbei beispielsweise auch ein Akkumulator, beispielsweise eine Powerbank, sein, also ein elektrisches Gerät, das eine Ladeenergie zur Verfügung stellen kann (bspw. auch ein Laptop oder dergleichen, welcher über einen USB-Anschluss auch andere elektrische Geräte mit Energie versorgen kann). Das Ladegerät kann auch ein portables (wiederaufladbares) Batteriemodul sein.

Das erfindungsgemäße elektrische Gerät ist vorzugsweise als ein Hörgerät ausgeführt. Das Gerät weist einen Gegenkontaktanschluss zur elektrischen Kontaktierung mit dem vorstehend beschriebenen Ladekontaktanschluss auf, wobei der Gegenkontaktanschluss einen ersten Gegenkontakt zur Kontaktierung des Kontaktstifts und einen zweiten Gegenkontakt zur Kontaktierung einer Kontaktfläche des Kontaktelements aufweist.

Der erste Gegenkontakt ist vorzugsweise zumindest abschnittsweise kalottenartig (d.h. in Form einer vorzugsweise kugelartigen Mulde) ausgebildet, sodass eine Berührungsfläche zwischen dem Freiende des Kontaktstifts und dem ersten Gegenkontakt möglichst groß dimensioniert ist. Vorzugsweise ist der zweite Gegenkontakt analog zu dem Kontaktelement konzentrisch zu dem ersten Gegenkontakt angeordnet und umgibt diesen beispielsweise ringförmig geschlossen. Dadurch ist vorteilhafterweise auch im mit den Ladekontaktanschluss gekoppelten (Kontakt- )Zustand eine relative Verdrehung der beiden Anschlüsse zueinander (d.h. insbesondere um die mit dem Kontaktstift zusammenfallende Drehachse des Ladekontaktanschlusses) ermöglicht.

Nachfolgend sind Ausführungsbeispiele der Erfindung anhand einer Zeichnung näher erläutert. Darin zeigen:
- Fig. 1: in perspektivischer Ansicht ein Hörgerät mit einem Gegenkontaktanschluss zum Anschluss eines Ladekontaktanschlusses für das Laden einer im Hörgerät integrierten wiederaufladbaren Batterie,
- Fig. 2: ausschnittsweise den Gegenkontaktanschluss,
- Fig. 3: in perspektivischer Darstellung eine erste Ausführung des Ladekontaktanschlusses,
- Fig. 4: in perspektivischer, teiltransparenter, Darstellung den Ladeanschlusskontakt gemäß der ersten Ausführung,
- Fig. 5: in Schnittansicht den Ladekontaktanschlusses gemäß der ersten Ausführung,
- Fig. 6: in perspektivischer Darstellung eine erste Ausführung des Ladekontaktanschlusses,
- Fig. 7: in perspektivischer, teiltransparenter, Darstellung den Ladeanschlusskontakt gemäß der ersten Ausführung, und
- Fig. 8: ein schematisches Magnetflussdiagramm für verschiedene Ausführungsformen des Ladekontaktanschlusses.

Einander entsprechende Teile und Größen sind in allen Figuren stets mit den gleichen Bezugszeichen versehen.

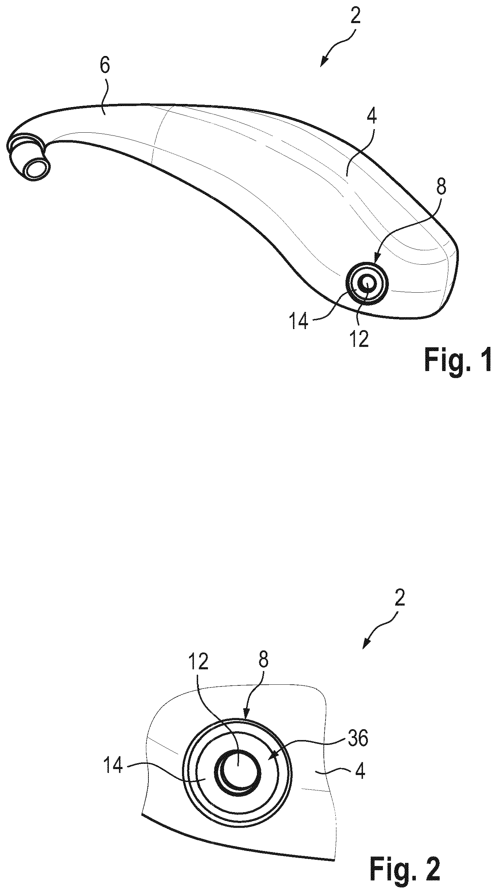

In Fig. 1 ist ein elektrisches Gerät 2 dargestellt. Das Gerät 2 ist hierbei insbesondere als ein Hörgerät ausgeführt, und nachfolgend auch als solches bezeichnet. Das Hörgerät ist beispielhaft als ein Hinter-dem-Ohr-Hörhilfegerät (HdO) ausgeführt.

Das Hörgerät 2 weist ein (Hörgeräte-)Gehäuse 4 sowie einen daran befestigten Traghaken 6 auf. Das Hörgerät 2 umfasst zum Betrieb seiner elektrischen Komponenten (nicht näher dargestellte Mikrofone, ein Lautsprecher, ein Signalprozessor sowie gegebenenfalls ein Kommunikationsmodul) eine wieder aufladbare Batterie. Um diese zum Aufladen nicht aus dem Gehäuse 4 entnehmen zu müssen, weist das Hörgerät 2 einen Ladeanschluss 8 auf, welcher einen Gegenkontaktanschluss zu einem im Folgenden näher beschriebenen Ladekontaktanschluss 10 bildet. Des Weiteren weist das Hörgerät 2 auch eine der wieder aufladbaren Batterie zugewiesene Ladeelektronik auf, die dazu eingerichtet ist, den Ladevorgang sowie den Ladestand der Batterie zu überwachen.

Der Ladeanschluss 8 weist zwei konzentrisch zueinander angeordnete Kontaktelemente, konkret ein zentrales, erstes Kontaktstück 12 sowie ein dieses ringförmig umgebendes zweites Kontaktstück 14 auf (Fig. 2). Das Kontaktstück 12 ist zumindest abschnittsweise kalottenartig ausgeführt. Das erste und das zweite Kontaktstück 12, 14 bilden dabei jeweils einen Gegenkontakt für korrespondierende Kontaktelemente 16, 18 des Ladekontaktanschlusses 10.

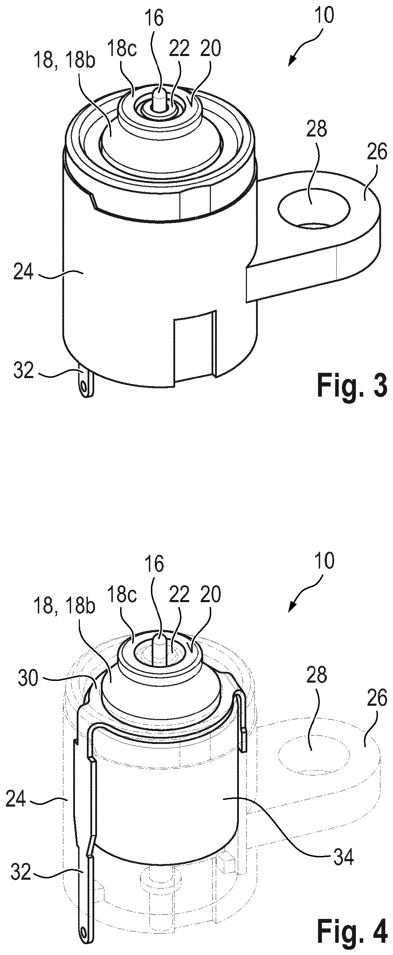

Eine erste Ausführungsform des Ladekontaktanschlusses 10 ist nachfolgend anhand der Figuren 3 bis 5 näher erläutert.

Die Kontaktelemente 16, 18 des nachfolgend auch verkürzt als Ladestecker bezeichneten Ladekontaktanschlusses 10 sind ebenfalls konzentrisch zueinander angeordnet. Das zentrale Kontaktelement 16 ist als ein Kontaktstift ausgeführt, insbesondere als ein Federkontaktstift oder Pogo Pin, wobei das Kontaktelement 18 den Kontaktstift 16 hülsenartig umfangsseitig einfasst. Das Kontaktelement 18 weist eine stirnseitige, ringförmige, Kontaktfläche 20 auf, wobei ein Freiende des Kontaktstifts 16 der Kontaktfläche 20 axial empor- oder übersteht. Die Kontaktfläche 20 ist hierbei in einer Ebene senkrecht zur Längsrichtung (Axialrichtung) des Kontaktstifts 16 angeordnet. Der Kontaktstift 16 ist mittels einer elektrisch nichtleitenden Isolierhülse 22 von dem Kontaktelement 18 isoliert gehalten.

Die Kontaktelemente 16, 18 sind zumindest teilweise in einem isolierenden Gehäuse 24 aufgenommen. Das etwa zylindrische Gehäuse 24 weist einen seitlichen Ausleger 26 mit einer Durchführöffnung 28 auf, mittels welcher das Gehäuse 24 beziehungsweise der Ladestecker 10 beispielsweise in einem nicht näher gezeigten Ladegerät befestigt werden kann.

Das Kontaktelement 18 ist mit einem Kontaktring 30 innerhalb des Gehäuses 24 kontaktiert. Der Kontaktring 30 weist zwei Kontaktlaschen 32 oder Kontaktfüße auf, welche parallel zum Kontaktstift 26 gebogen oder abgewinkelt sind. Im Montagezustand ist das Kontaktelement 18 über den Kontaktring 30 und die Kontaktlaschen 32 mit einer Ladeelektronik kontaktiert.

Innerhalb des Gehäuses 24 ist der Kontaktstift 16 von einem permanentmagnetischen Magnetelement 34 in Form eines Ringmagneten oder einer Magnethülse umgeben. Die Kontaktlaschen 32 sind hierbei beispielsweise parallel entlang einer Außenfläche des Magnetelements 34 geführt.

Das Kontaktstück 14 (optional auch das Kontaktstück 12) ist vorzugsweise aus einem ferri- oder ferromagnetischen Material gebildet, so dass das Magnetelement 34 eine magnetische Anziehungskraft auf dieses ausüben kann. Die magnetische Anziehung realisiert eine magnetische Haltekraft im kontaktierten Zustand des Ladesteckers 10 mit dem Ladeanschluss 8. Im Kontaktzustand greift der Kontaktstift 16 freiendseitig in das kalotten- oder buchsenartige Kontaktstück 12 ein, wobei die Kontaktfläche 20 in einem Berührungskontakt mit einer Kontaktfläche 36 des Kontaktstücks 14 ist.

Zur Verbesserung der magnetischen Anziehungs-/Haltekraft ist das Kontaktelement 18 ebenfalls einem ferrimagnetischen oder ferromagnetischen Material ausgeführt, um den Magnetfluss des Magnetelements 34 in Richtung des Kontaktstücks 14 (beziehungsweise in eine Richtung senkrecht zur Kontaktfläche 20) zu leiten und zu fokussieren. Das Kontaktelement 18 ist hierbei stirnseitig an dem Magnetelement 34 angeordnet. Das Kontaktelement 18 und das Magnetelement 34 umgeben den Kontaktstift 16 jeweils ringförmig geschlossen.

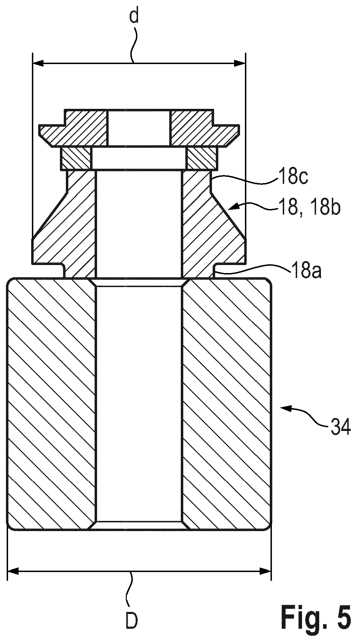

Wie insbesondere in der Schnittdarstellung der Fig. 5 ersichtlich ist, weist das insbesondere ferritische Kontaktelement 18 einen Durchmesser d auf, welcher kleiner als der Außendurchmesser D des Magnetelements 34 dimensioniert ist. Das Kontaktelement 18 weist hierbei im Wesentlichen drei Abschnitte 18a, 18b, 18c auf. Der ringförmige Abschnitt 18a liegt an der Stirnseite des Magnetelements 34 an. Der sich daran anschließende kegelstumpfförmige Abschnitt 18b weist an seiner Basis einen größeren Durchmesser auf als der Abschnitt 18a, insbesondere ist dieser Basisdurchmesser der Durchmesser d. Der Abschnitt 18b verjüngt sich ausgehend vom Magnetelement 34 entlang des Kontaktstifts 16 und mündet in den ringförmigen Abschnitt 18c, welcher im Wesentlichen den gleichen Außendurchmesser wie der Abschnitt 18a aufweist. Die Stirnseite des Abschnitts 18a bildet hierbei die Kontaktfläche 20.

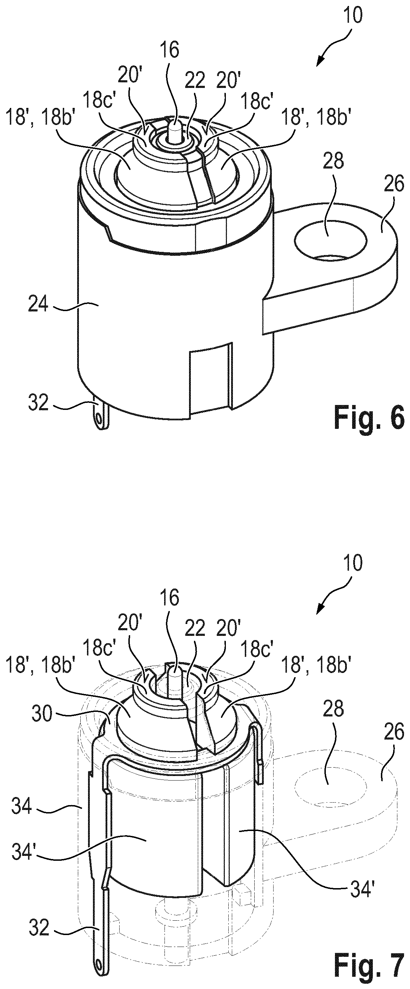

Die Fig. 6 und Fig. 7 zeigen ein zweites Ausführungsbeispiel des Ladesteckers 10. Diese Ausführungsform entspricht im Wesentlichen der vorstehend beschriebenen Ausführung, wobei in der Fig. 6 und Fig. 7 sowohl das Magnetelement 34 als auch das Kontaktelement 18 in jeweils zwei Hälften geteilt sind. Das Magnetelement 34 ist hierbei in zwei Ringmagnethälften (Halbmagnete) 34' geteilt, wobei das Kontaktelement 18 in zwei Elementhälften 18' geteilt ist. Die Ringmagnethälften 34' und die Elementhälften 18' umgeben den Kontaktstift 16 somit ringförmig geöffnet.

Der Aufbau der Elementhälften 18' entspricht sinngemäß dem Aufbau des Kontaktelements 18, wobei die Bezugszeichen der Bestandteile entsprechend ebenfalls mit einem Strich (') gekennzeichnet sind. Die Elementhälften 18' sind hierbei fluchtend zu einer jeweils zugeordneten Ringmagnethälfte 34' angeordnet. Die Elementhälften 18' sind räumlich voneinander beabstandet angeordnet, jedoch gemeinsam mit dem Kontaktring 30 elektrisch kontaktiert. In dieser Ausführungsform sind die Magnetpole (N, S) der Ringmagnethälften 34' zueinander entgegen gerichtet angeordnet.

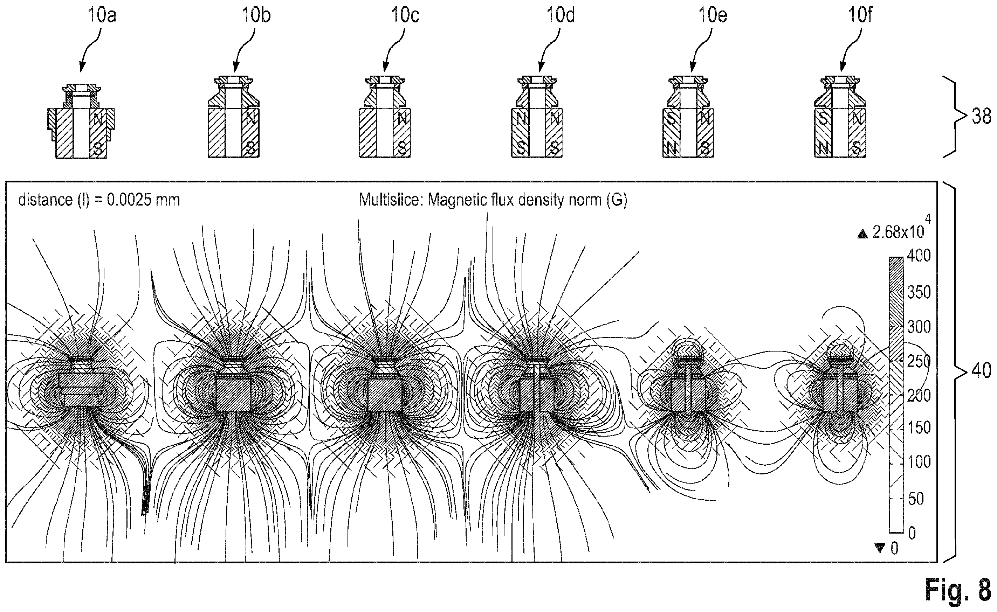

Das Diagramm der Fig. 8 zeigt zwei horizontal übereinander angeordnete Abschnitte 38, 40. In dem Abschnitt 38 sind sechs unterschiedliche

Ausführungsformen 10a, 10b, 10c, 10d, 10e, 10f des Ladesteckers 10 gezeigt. Der Abschnitt 40 zeigt korrespondierende Simulationen für die resultierende magnetische Anziehungskraft beziehungsweise den Magnetfluss.

Das Ausführungsbeispiel 10a ist ein nicht erfindungsgemäßer Ladestecker 10 ohne das Kontaktelement 18, bei welchem lediglich ein leitender Ringkontakt stirnseitig und um das Magnetelement 34 angeordnet ist.

Das Ausführungsbeispiel 10b zeigt einen nicht erfindungsgemäßen Ladestecker 10, bei welchem das Kontaktelement 18 einen Durchmesser d aufweist, welcher gleich dem Durchmesser D des Magnetelements 34 ist.

Das Ausführungsbeispiel 10c entspricht der in den Figuren 3 bis 5 gezeigten Ausführungsform, bei welcher der Durchmesser d des ferritischen Kontaktelements 18 kleiner als der Durchmesser D des Magnetelements 34 dimensioniert ist. Durch die Reduzierung des Durchmessers wird eine um bis zu 20-40 % erhöhte Magnetkraft als bei dem Ausführungsbeispiel 10a realisiert.

In dem Ausführungsbeispiel 10d sind das Kontaktelement 18 und das Magnetelement 34 in die Elementhälften 18' und Ringmagnethälften 34' geteilt, wobei die Polaritäten oder Magnetpole der Magnethälften 34' gleichgerichtet orientiert sind.

Das Ausführungsbeispiel 10e entspricht der Ausführung der Fig. 6 und Fig.7, bei welcher des ferritischen Kontaktelement 18 und das Magnetelement 34' geteilt sind sowie die Polarität der beiden Halbmagnete 34' umgekehrt, also entgegengerichtet zueinander orientiert ist. In dieser Ausführungsform ist der Einflussbereich des magnetischen Flusses stark reduziert.

Das nicht erfindungsgemäße Ausführungsbeispiel 10f entspricht dem Ausführungsbeispiel 10e, wobei das Kontaktelement 18' beziehungsweise die Elementhälften 18' einen Durchmesser d aufweisen, welcher gleich dem Magnetdurchmesser D ist.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Gerät, Hörgerät
- 4: Gehäuse
- 6: Traghaken
- 8: Ladeanschluss, Gegenkontaktanschluss
- 10: Ladekontaktanschluss, Ladestecker
- 12: Kontaktstück, Gegenkontakt
- 14: Kontaktstück, Gegenkontakt
- 16: Kontaktelement, Kontaktstift
- 18: Kontaktelement
- 18': Elementhälfte
- 18a, 18b, 18b', 18c, 18c': Abschnitt
- 20, 20': Kontaktfläche
- 22: Isolierhülse
- 24: Gehäuse
- 26: Ausleger
- 28: Durchführöffnung
- 30: Kontaktring
- 32: Kontaktlasche
- 34: Magnetelement
- 34': Ringmagnethälfte
- 36: Kontaktfläche
- 38: Abschnitt
- 40: Abschnitt

- d, D: Durchmesser

## Patentansprüche

1. Ladekontaktanschluss (10) für ein Ladegerät eines elektrischen Geräts (2), insbesondere eines Hörgeräts, aufweisend
- einen zentralen Kontaktstift (16) zur Kontaktierung eines ersten Gegenkontakts (12) eines Gegenkontaktanschlusses (8),
- ein permanentmagnetisches Magnetelement (34) zur magnetischen Anziehung des Gegenkontaktanschlusses (8), welches den Kontaktstift (16) einfasst, und
- ein an der dem Gegenkontaktanschluss (8) zugewandten Stirnseite angeordnetes Kontaktelement (18) zur Führung und Fokussierung des Magnetfelds des Magnetelements (34) in Richtung eines zweiten Gegenkontakts (14) des Gegenkontaktanschlusses (8),
- wobei das Kontaktelement (18) einen Durchmesser (d) aufweist, welcher stets kleiner als ein Durchmesser des Magnetelements (34) ist.

2. Ladekontaktanschluss (10) nach Anspruch 1,
**dadurch gekennzeichnet,**
**dass** sich der Durchmesser (d) des Kontaktelements (18) entlang des Kontaktstifts (16) verjüngt.

3. Ladekontaktanschluss (10) nach Anspruch 1 oder 2,
**dadurch gekennzeichnet,**
**dass** das Kontaktelement (18) zwei zueinander beabstandet angeordnete Elementhälften (18') aufweist.

4. Ladekontaktanschluss (10) nach einem der Ansprüche 1 bis 3,
**dadurch gekennzeichnet,**
**dass** das Magnetelement (34) ein Ringmagnet ist.

5. Ladekontaktanschluss (10) nach einem der Ansprüche 1 bis 4,
**dadurch gekennzeichnet,**
**dass** das Magnetelement (34) zwei Magnethälften (34') aufweist.

6. Ladekontaktanschluss (10) nach Anspruch 5,
**dadurch gekennzeichnet,**
**dass** die Magnetpole der Magnethälften (34') zueinander entgegen gerichtet angeordnet sind.

7. Ladekontaktsystem für ein elektrisches Gerät (2), insbesondere für ein Hörgerät, mit einem Ladekontaktanschluss (10) nach einem der Ansprüche 1 bis 6.

## Claims

1. Charging contact connection (10) for a charger of an electrical device (2), in particular a hearing aid, comprising
- a central contact pin (16) for contacting a first counter-contact (12) of a counter-contact connection (8),
- a permanent-magnetic magnet element (34) for magnetically attracting the counter-contact connection (8), which encloses the contact pin (16), and
- a contact element (18) arranged on the front face facing the counter-contact connection (8) for guiding and focusing the magnetic field of the magnetic element (34) in the direction of a second counter-contact (14) of the counter-contact connection (8),
- wherein the contact element (18) has a diameter (d) which is always smaller than a diameter of the magnetic element (34).

2. Charging contact connection (10) according to Claim 1,
**characterized**
**in that** the diameter (d) of the contact element (18) tapers along the contact pin (16).

3. Charging contact connection (10) according to Claim 1 or 2,
**characterized**
**in that** the contact element (18) has two element halves (18') arranged at a distance from each other.

4. Charging contact connection (10) according to any of Claims 1 to 3,
**characterized**
**in that** the magnetic element (34) is a ring magnet.

5. Charging contact connection (10) according to any of Claims 1 to 4,
**characterized**
**in that** the magnetic element (34) has two magnet halves (34').

6. Charging contact connection (10) according to Claim 5,
**characterized**
**in that** the magnetic poles of the magnet halves (34') are arranged in opposite directions to each other.

7. Charging contact system for an electrical device (2), in particular for a hearing aid, with a charging contact connection (10) according to any of Claims 1 to 6.

## Revendications

1. Borne de contact de charge (10) destinée à un chargeur d'un appareil électrique (2), en particulier d'une prothèse auditive, comportant
- une broche de contact (16) centrale pour le contact avec un premier contact antagoniste (12) d'une borne de contact antagoniste (8),
- un élément magnétique permanent (34) pour attirer magnétiquement la borne de contact antagoniste (8), qui entoure la broche de contact (16), et
- un élément de contact (18) disposé sur la face frontale tournée vers la borne de contact antagoniste (8) pour guider et focaliser le champ magnétique de l'élément magnétique (34) en direction d'un deuxième contact antagoniste (14) de la borne de contact antagoniste (8),
- l'élément de contact (18) présentant un diamètre (d) qui est toujours inférieur à un diamètre de l'élément magnétique (34).

2. Borne de contact de charge (10) selon la revendication 1,
**caractérisée**
**en ce que** le diamètre (d) de l'élément de contact (18) se réduit le long de la broche de contact (16).

3. Borne de contact de charge (10) selon la revendication 1 ou 2,
**caractérisée**
**en ce que** l'élément de contact (18) présente deux moitiés d'élément (18') disposées de manière espacée l'une de l'autre.

4. Borne de contact de charge (10) selon l'une quelconque des revendications 1 à 3,
**caractérisée**
**en ce que** l'élément magnétique (34) est un aimant annulaire.

5. Borne de contact de charge (10) selon l'une quelconque des revendications 1 à 4,
**caractérisée**
**en ce que** l'élément magnétique (34) présente deux moitiés d'aimant (34).

6. Borne de contact de charge (10) selon la revendication 5,
**caractérisée**
**en ce que** les pôles magnétiques des moitiés d'aimant (34') sont disposés de manière à être opposés l'un à l'autre.

7. Système de contact de charge destiné à un appareil électrique (2), en particulier destiné à une prothèse auditive, comprenant une borne de contact de charge (10) selon l'une quelconque des revendications 1 à 6.
